# EUROPEAN PATENT APPLICATION

(11) **EP 2 390 596 A1**
(43) Date of publication of application: **30.11.2011**
(21) Application number: 10250967.6
(22) Date of filing: 24.05.2010
(51) Int. Cl.: F24J 2/20, F24J 2/48

(54) **Solar collector**

(71) Applicant: Y&M Finance Partners Europe LLP., Kingsdown, Kent TN15 6AR (GB)
(72) Inventor: Yazvina, Irina, Moscow 117437 (RU); Nikomarova, Anastasiya, Moscow 107113 (US); Tshomaria, Victor, Moscow 117465 (RU); Ermolenko, Georgy, Moscow 114519 (US)

(57) **Abstract**

A glazed solar collector with absorber made of non-transparent, heat resistant, ultraviolet resistant and hydro resistant polymeric materials (2), transparrent polycorbonate glazing (10), rear and side insulation (3,4) concluded in lightweight case (1). Absorber is a multiwall sheet with heat tranferring fluid circulating within. Variing clearanceallowed between absorber and glasing where air preassure regulation is done via perforated holes in the case.

## Description

Solar collector. This invention can be classified as of type of glased solar collectors and methods of producing such collectors. Solar collectors normally have rectangular shape containing absorber insulated bottom pane and protective transparent cover on top of the absorber. Such devices usually are built-in the piched roof or installed on flat roof with a mounting frame.

Background art. More than 5 million solar water heaters over the world are in operation now in individual homes, centralized hot water supply systems of residential and public buildings, including hotels, hospitals, sports facilities, etc. Industrial production of solar water heaters has been established in countries such as Japan, Israel, Cyprus, USA, Australia, India, France, South Africa and others.

Heating, hot water and air conditioning in residential, public and industrial buildings cover about 30-35% of the total annual energy consumption. In the regions with more than 1800 hours of sun activity per year, it is advisable to use solar energy for heating. Solar water heaters have been widely used because of the simplicity of their design, reliability and rapid payback.

Today, the majority of produced solar collectors is made using metal panels for absorber and with glazing that corresponds to the unit weight of the item approximately 15 ... 20 kg/m2. Thus, the weight of the solar collector with surface of 6 m2 is approximately 100 ... 150 kg, which creates certain difficulties in installation.

Technology of manufacturing of solar panels using metal heat absorbers and glass as a transparent cover are highly developed and already practically reached its limit.

One can hardly expect a significant reduction in the cost of solar installations, produced by traditional technologies with traditional materials. Additional reduce of the solar collector cost, manufactured by traditional technologies is very problematic and in the future the cost of solar collectors could only increase, taking into account inflation, the rising of labor and raw materials costs. So it is necessary to look for new technical solutions and technologies for production of solar thermal installations, to reduce costs significantly while maintaining high operating performance.

One of the promising directions of significant cost reduction with saving of high energy performance is transition from traditional constructional materials (metal, glass) to the modern lower-cost, light and technological heat-resistant and UV-resistant plastics.

The use of plastics in the construction of a solar collectors instead of glass and metal allows to reduce its specific weight characteristics a few times (from 15 ... 20 kg /m 2 to 5 ... 7 kg/m2) and, more significantly to reduce its unit cost (from 250 ... 400 $ /m2 to 90 ... 130 $ / m2), while maintaining high thermal and operational characteristics.

Brief description of drawings. In the following detailed description chapter the invention will be explained in more detail with reference to the drawings, in which:
Fig. 1 Scale cutaway perspective of assemled Solar Collector
Fig. 2 is partial cataway perspective of join between the absorber and heat transfer fluid pipe.
Fig.3 is schematic illustration of assembled Solar Collector

Detailed description. The prefered build of the invetion will be described with reference to flat plate collector which will be prefered way of assembley, however not excluding that other case shapes could be applied with the same absorber with minimum change in construction.

This flat-plate collector due to its construction and principle of operation is an independent element of building or structure where it is installed.

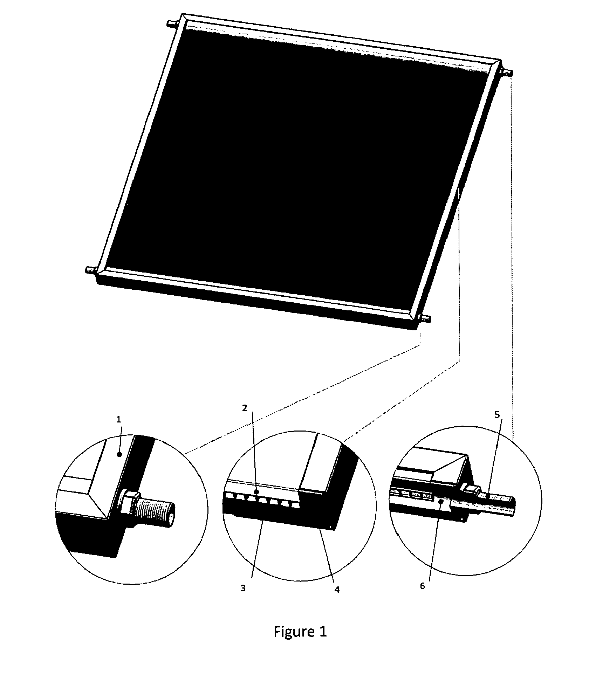

Fig. 1 shows in elustrative example a principal build of flat plate Solar Collector. In cutaway perspective it is seen that Solar Collector consists of absorber (2), rear (3) and side (4) insulation plates concluded in case (1). Front thermal insulating cover (10) is transparent for solar radiation. Via fitting (5) with ending cap (6) heat transfer fluid passes in and out of the collector.

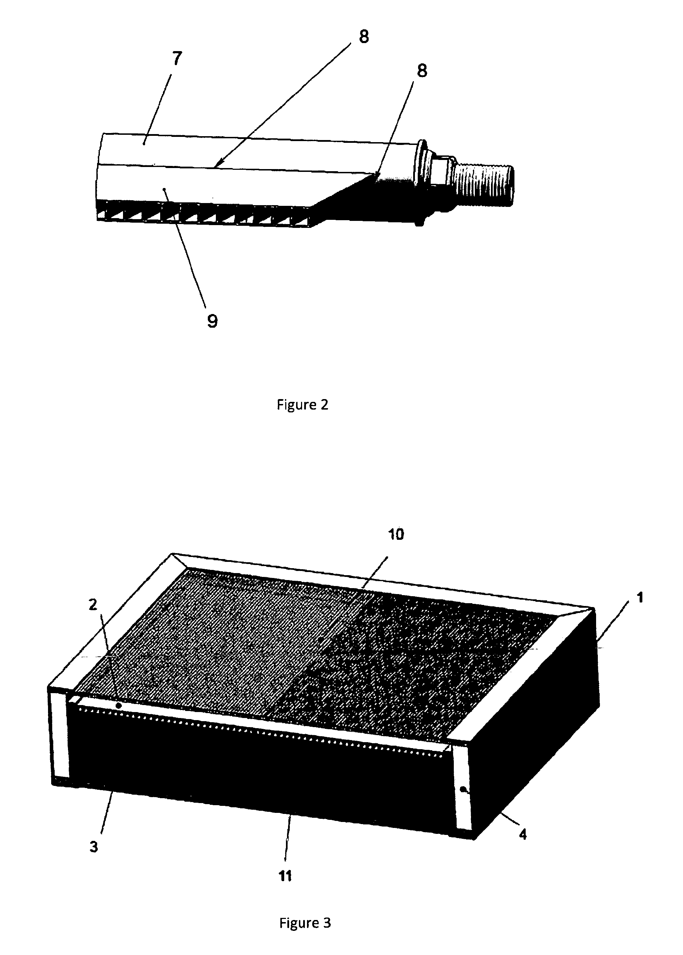

The case (1) is thermally insulated. Collector absorber (2) is produced from non-transparent, heat resistant, ultraviolet resistant and hydro resistant polymeric materials (NORYL EN150SP) in the form of flat thin multiwall sheet (9) with inner channels connected with fluid collecting pipes (7) through a long slot in the pipe wall (Fig.2). Absorber is hermetically connected with pipe by means of glue or welded joint on perimeter (8).

Front cover (10) is produced from multiwall heat and ultraviolet resistant, transparent for solar irradiation polymeric material. Heat insulation of bottom (3) and side (4) faces produced from foam or multiwall material with low heat conductivity and reflection of heat irradiation from the side facing the absorber.

Case and all construction elements are produced from ultraviolet resistant and heavy duty weather conditions polymeric materials. To eliminate pressure increase in the air space inside the solar collector while heating it is connected with surrounding atmosphere through small perforated holes in the case.

Manufacture of the Solar Collector and the individual hot water supply installations from heat-resistant plastics allows to decrease unit weight by 3-4 times, decrease cost by 2-3 times, simplify and reduce cost of installation and maintenance.

## Claims

1. A Solar Collector comprising of Honeycomb polycorbonate glazing, Absorber as a multiwall sheet of NORYL EN150SP connected to heat transfer fluid pipes, side and rear thermal insulation concluded in case.

2. Solar Collector according to claim 1 with additional rear Penofol plate insulation for countires with moderate climates.

3. Solar Collector according to claim 1 and/or 2 with thinner absorber walls used with antifreese as heat tranferring fluid.

4. Solar Collector according to claim 1 and/or 2 with thicker absorber walls used with water as heat tranferring fluid.

5. Solar Collector according to claims 1-4 with adjustable clearance between absorer and polycorbonate glazing .
